(19) **Europäisches Patentamt**
**European Patent Office**
**Office européen des brevets**

(11) **EP 2 420 967 A1**

(12) **EUROPEAN PATENT APPLICATION**

(43) Date of publication:
**22.02.2012 Bulletin 2012/08**

(51) Int Cl.:
***G06Q 40/00*** (2012.01)   ***G06F 11/36*** (2006.01)

(21) Application number: **11005727.0**

(22) Date of filing: **13.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.08.2010  IN MU22952010**

(71) Applicant: **Tata Consultancy Services Ltd.
Mumbai 400 021, Maharashtra (IN)**

(72) Inventors:
• **Banahatti, Vijayanand Mahadeo
Hadapsar, Pune
Maharashtra 411013 (IN)**

• **Iyengar, Srinivasan Venkatachary
Hadapsar, Pune
Maharashtra 411013 (IN)**
• **Lohda, Sachin Premsukh
Hadapsar, Pune
Maharashtra 411013 (IN)**

(74) Representative: **Manitz, Finsterwald & Partner
GbR
Postfach 31 02 20
80102 München (DE)**

(54) **Generating assessment data**

(57)    Methods and systems described herein implement data generation for purposes such as data-driven assessment of an application, a process, or a system. In one implementation, seed data (116) having one or more characteristics is received. Once received, the seed data (116) is repeatedly transformed to generate a desired volume of an assessment data (118) having the one or more characteristics associated with the seed data (116).

Fig. 1

**Description**

TECHNICAL FIELD

The present subject matter, in general, relates to generation of data and, in particular, relates to generation of data for assessing one or more applications.

BACKGROUND

Applications, such as those used in banking systems, operate on large volumes of data. Such applications, in their development stages, have to be tested or assessed before they can be deployed. For data-driven assessment of such applications, large volume of assessment data, also referred to as utility data is required. For the data driven assessment to be effective, the assessment data should have certain desired characteristics, such as syntax, semantics, and statistics, similar to that of actual data, such as production data, which the application would eventually handle or operate on after deployment.

Possible candidates for assessment data may include production data. The production data is the actual data on which the application would operate, and hence is suited for the purpose of assessment. However, production data may include sensitive information or information privy to individuals associated with it. For example, in case of banking applications, it would not be appropriate to use production data, i.e., client-specific information for testing purposes. In such cases, the production data can be modified by using data masking or data obfuscation techniques which either hide or delete user-specific information, and subsequently replace it with relevant but false data. However, such techniques are not suitable when required volume of assessment data is more than the volume of the production data available for the assessment.

Other approaches include generating synthetic data, which possesses the desired characteristics, such as syntax, semantics, and statistics, associated with real data. The synthetic data may be generated using certain synthetic data generation tools, which are generally costly and require manual preparation, such as providing metadata. Such preprocessing is a time consuming task and may introduce errors at the input stage of the assessment. The synthetic data can also be generated using customized scripts. The customized scripts based on varying requirements can be a complicated task in itself. Moreover, the synthetic data generated using the customized scripts may be typically non-reusable.

SUMMARY

The subject matter described herein relates to systems and methods for generating high utility data, which are further described below in the detailed description. This summary is not intended to identify essential features of the claimed subject matter nor is it intended for use in determining or limiting the scope of the claimed subject matter.

In one implementation, seed data associated with one or more characteristics is received. Once received, the seed data is repeatedly transformed to generate a desired volume of assessment data having the one or more characteristics associated with the seed data.

BRIEF DESCRIPTION OF THE DRAWINGS

The detailed description is provided with reference to the accompanying figures. In the figures, the left-most digit of a reference number identifies the figure in which the reference number first appears. The same numbers are used throughout the drawings to reference like features and components.

Fig. 1 illustrates an exemplary assessment data generation system, in accordance with an embodiment of the present subject matter.

Fig. 2 illustrates an exemplary transformation module of the exemplary assessment data generation system of Fig. 1, in accordance with an embodiment of the present subject matter.

Fig. 3 illustrates an exemplary method of data generation, in accordance with an embodiment of the present subject matter.

DETAILED DESCRIPTION

The present subject matter relates to systems and methods for assessment data generation. As indicated previously, certain applications, such as those used in banking systems, operate on a large volume of data. Testing of such applications before they are deployed requires data known as assessment data. The assessment data should ideally include desired characteristics, such as cell-level characteristics, column characteristics, and inter-column characteristics, similar to that of actual data. It should be noted that the effectiveness of the assessment data depends on the type of characteristics. For example, bank account numbers would be based on a defined syntax, say a fixed length. The syntax can be based on the requirements of the organization. Assessment data should therefore possess the relevant characteristics to effectively implement the assessment of the application in question. This further ensures that the proper response of the application to be tested is captured during the assessment, and appropriate corrective actions, if required, can be implemented.

Typically, in order to validate the response of the application being assessed, large volumes of assessment data are required. The production data, which is eventually utilized by the application, can be used for assessing the application to be deployed. However, concerns relating to privacy and sensitivity of the production data may deter using production data for performing assessment of the application. Moreover, data generated using synthetic data generation is costly and requires manual inputs. Furthermore, the quality of the assessment data generated through such means is not desirable; as such data may lack the desired characteristics, such as syntaxes, semantics, and statistics that are associated with actual data on which the application would operate. Furthermore, assessment data generated through scripted code is non-reusable and requires a skilled human resource.

To this end, systems and methods for assessment data generation are described. In one implementation, a low volume of an input seed data having desired characteristics, such as syntax and semantics, similar to actual data is received. Upon receiving, the seed data is transformed a predefined number of times to generate a desired volume of assessment data. In another implementation, the assessment data can be generated by transforming the seed data depending upon the volume of assessment data to be generated.

The seed data can either be pre-existing, such as portions of production data itself or can also include user-defined data having the desired characteristics of the actual data. For example, the seed data specifying bank account information would have the proper defined syntax, such as a 15 digit account number, to ensure that the assessment data is similar to the actual data. It should be noted that the similarity of the assessment data and the actual data is measured by the similarity of their characteristic. Examples of such characteristics include, but are not limited to, syntax of the data, semantics, and statistics. Other characteristics would also be included within the scope of the present subject matter.

In another implementation, the characteristics can also include cell level characteristics, column level characteristics, inter-column characteristics, and so on. Examples of cell level characteristics include, but are not limited to syntax, nature of data such as type of names, and such. The column level characteristics include statistical characteristics. For example, assessment data indicating cellular handset penetration in a market could indicate that a particular handset is more sought for as compared to other models. The inter-column characteristics include, but are not limited to referential integrity, association between columns, derived columns etc.

In another implementation, any volume of assessment data can be generated. Further, the seed data can be transformed iteratively, till the required volume of assessment data is obtained. In such a case, it should be noted that any volume of assessment data can be generated based on smaller quantities of seed data. Furthermore, the seed data can be transformed ensuring non-repetitiveness or randomness in the assessment data generated. The assessment data so generated is based on the seed data, and therefore, includes the characteristics of the seed data.

While aspects of described systems and methods for assessment data generation can be implemented in any number of different computing devices, environments, and/or configurations, the implementations are described in the context of the following exemplary system architecture(s).

EXEMPLARY SYSTEMS

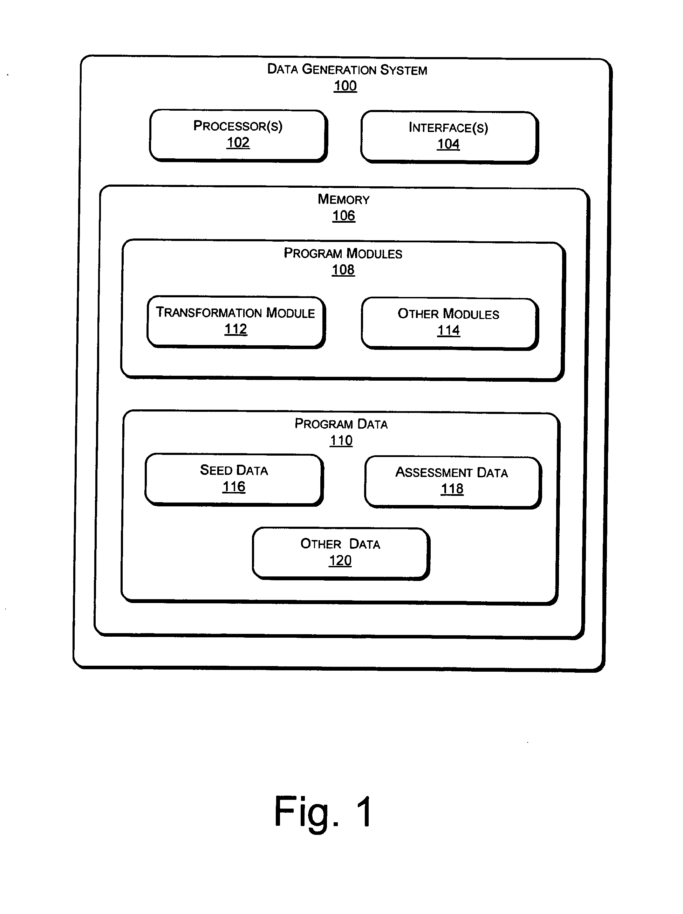

Fig. 1 illustrates an exemplary data generation system 100, according to an embodiment of the present subject matter. The system 100 may be implemented to provide a desired volume of assessment data for a data-driven assessment of an application. It should be noted that the assessment of the application can be performed by assessing the system that implements such an application. Examples of such applications include, but are not limited to, banking applications, accounting applications order-processing applications etc.

The system 100 may be implemented as any computing device. For instance, the system 100 may be implemented as desktop computers, multiprocessor systems, laptops, network computers, cloud servers, minicomputers, mainframe computers, and the like. The system 100 includes one or more processor(s) 102, I/O interface(s) 104, and a memory 106 coupled to the processor 102.

The processor 102 can be a single processing unit or a number of units, all of which could include multiple computing units. The processor 102 may be implemented as one or more microprocessors, microcomputers, microcontrollers, digital signal processors, central processing units, state machines, logic circuitries, and/or any devices that manipulate signals based on operational instructions. Among other capabilities, the processor 102 is configured to fetch and execute computer-readable instructions and data stored in the memory 106.

The I/O interfaces 104 may include a variety of software and hardware interfaces, for example, interfaces for peripheral device(s), such as a keyboard, a mouse, an external memory, and a printer. Further, the I/O interfaces 104 may enable the system 100 to communicate with other computing systems, such as web servers and external databases. The I/O interfaces 104 can facilitate multiple communications within a wide variety of networks and protocol types, including wired networks, for example local area network (LAN) cable etc., and wireless networks such as Wireless LAN (WLAN), cellular, or satellite. For the purpose, the I/O interfaces 104 may include one or more ports for connecting a number of computing systems to each other or to another server computer. In one implementation, the I/O interfaces 104 may support multiple database platforms and flat files which are data files that contain records with no structured relationships. Additional knowledge, such as the file format properties, is required to interpret the flat files.

The memory 106 may include any computer-readable medium known in the art, including, for example, volatile memory such as static random access memory (SRAM) and dynamic random access memory (DRAM), and/or non-volatile memory, such as read-only memory (ROM), erasable programmable ROM, flash memories, hard disks, optical disks, and magnetic tapes. Further, the memory 106 includes program module(s) 108 and program data 110.

The program modules 108, amongst other things, include routines, programs, objects, components, data structures, etc., which perform particular tasks or implement particular abstract data types. The program data 110 serves, amongst other things, as a repository for storing data that is received, processed, and generated by one or more of the program modules 108. In one implementation, the program modules 108 include a transformation module 112 and other module(s) 114. The other modules 114 may also include programs that supplement applications implemented on the system 100, for example, programs in an operating system of the system 100.

The program data 110 includes, for example, a seed data 116, an assessment data 118, and other data 120. The seed data 116 includes input data provided to the system 100 for generating assessment data which is stored as assessment data 118. The other data 120 includes data generated as a result of the execution of one or more modules in the other modules 114. In one implementation, the seed data 116 and the assessment data 118 may be in the form of a single table, multiple tables, or databases.

The seed data 116 is further associated with a plurality of characteristics. In one implementation, examples of such characteristics include cell level characteristics, column level characteristics, and inter-column level characteristics, and so on. The cell level characteristics may be defined as micro level characteristics, for example, syntax, look and familiar feel of the seed data 116. For example, the syntax, in one example, may be defined as syntactic characteristics of the seed data 116. In such a case, the seed data 116 may be specified as certain combination of numeric or alphanumeric variables, or a variable having a fixed length. Other aspects for seed data 116 can also be specified, such as the look and feel of the seed data 116. For example, seed data 116 including names for Indian nationals would include commonly known names in India, such as Vijay, Srinivasan, Sachin, etc. On the other hand, seed data 116 indicating information associated with foreign nationals would have more varied types of names depending on the nationality requirements of the application in question.

In another implementation, the column level characteristics may include one or more macro level characteristics of the seed data 116. Examples of such characteristics include statistical characteristics and such. The column level characteristics can be used to ensure the correctness of the generated assessment data, such as the assessment data 118. The statistical characteristics may be defined as numerically expressed facts, for example, an average of a column of the seed data 116 or frequency distributions of data values in a column of the seed data 116. The checks may be defined as a test of certain conditions associated with a column of the seed data 116, for example, a check to verify whether a date field is greater than some specific date or a string field is never equal to NULL value.

In one embodiment, the seed data 116 may be a production data which is the actual data or the production data on which the application to be assessed, would eventually operate. In another implementation, the seed data 116 may be provided by a user of the system 100. For example, in a case when the production data is not available, a user-created data may be fed as the seed data 116. Further, the user-created data may be created with great care to maintain desired characteristics.

In one implementation, the seed data 116 is received by the transformation module 112. The transformation module 112, on receiving the seed data 116, determines at least one or more characteristics that are associated with the seed data 116. In one implementation, the transformation module 112 may be provided with a schema refresh functionality in order to detect any changes, if any, in a schema of the seed data 116. The schema of the seed data defines columns, tables, and the characteristics of the seed data. In another implementation, the transformation module 112 may additionally receive at least one of the characteristics of the seed data 116, say from a user through the I/O interfaces 104.

Once the characteristics of the seed data 116 are determined, the transformation module 112 transforms the seed data 116 to generate the assessment data 118. The transformation module 112 is configured to transform the seed data 116 a predefined number of times to generate a desired volume of the assessment data 118. For example, the transformation module 112 transforms the seed data five times to generate the assessment data which is five times the volume of the seed data provided. Notably, each transformation would result in unique values for assessment data 118. The transformation module 112 is further configured to transform the seed data 116, while preserving at least one characteristic of the seed data 116. The assessment data 118 generated by the transformation module 112 thus has a high utility in applications wherein a realistic data is required, for example, for functional testing of banking application programs.

It would be appreciated that transforming the seed data 116 ensures that the data values of the generated assessment data 118 are different from the data values of the seed data 116, based on which the assessment data 118 was generated. In one implementation, the seed data 116 used can also be included in the assessment data 118.

Furthermore, the transformation module 112 can also be configured to generate any volume of the assessment data 118 based on a relatively low volume of seed data 116. In one implementation, the transformation module 112 transforms the seed data 116 in multiple iterations. At the end of each transformation, the transformation module 112 can further check if the required volume of assessment data 118 has been generated. The transformation module 112, in case the predefined volume of assessment data 118 has not been generated, continues to transform the seed data 116 to provide the assessment data 118. In one implementation, the required volume of the assessment data 118 can either be defined by a user or can be in fixed proportion to the volume of the provided seed data 116.

In another implementation, the transformation module 112 can be configured to transform only one or more selected columns of the seed data 116. In that respect, the transformation module 112 only transforms each data item of the selected columns and their associated data in the seed data 116 to generate assessment data 118. The data items of rest of the columns of the seed data 116 are retained and are included in their original form in the assessment data 118.

In another implementation, the transformation module 112 can be configured to transform different portions, such as various tables of the seed data (116), in a different number of transformation rounds. For example, the transformation module 112 can transform a first table of the seed data 116 five times to generate data which is five times in volume to a volume of the first table and can transform a second table four times to generate data which is four times in volume to a volume of the second table. For the purpose, the transformation module (112) can be configured to receive multiple inputs from a user regarding the number of transformation rounds to be performed for the different portions. The transformation module 112 can be further configured to synchronize the data generated. For example, the data generated from first table and the second table can be used to fill in a third table which either completely or partially utilizes contents of the first and second table.

In another embodiment, the system 100 may include a graphical user interface (not shown in figures) using which a user may visually validate the intermediate data generated in each round and also the final assessment data 118 generated by the system 100. In an implementation, the graphical user interface includes a characteristics editor (not shown in figures) to receive the characteristics of the seed data 116 from a user. The characteristic editor provides more flexibility to the user in order to generate the high utility data. In another implementation, the graphical user interface includes a pluggable interface (not shown in figures) to receive a transformation rule from a user. The pluggable interface helps a user to customize the transformation as per requirements. In another implementation, the graphical user interface includes a build project interface (not shown in figures) configured to display all existing characteristics in the seed data 116. The build project interface can also be configured to suggest predefined transformations for different portions of the seed data 116. For example, the build project interface can display all the existing characteristics, such as syntax, primary keys, foreign keys, etc., of different portions, such as columns of the seed data 116, and can suggest appropriate predefined transformations, such as randomization noise addition etc., with respect to the different portions.

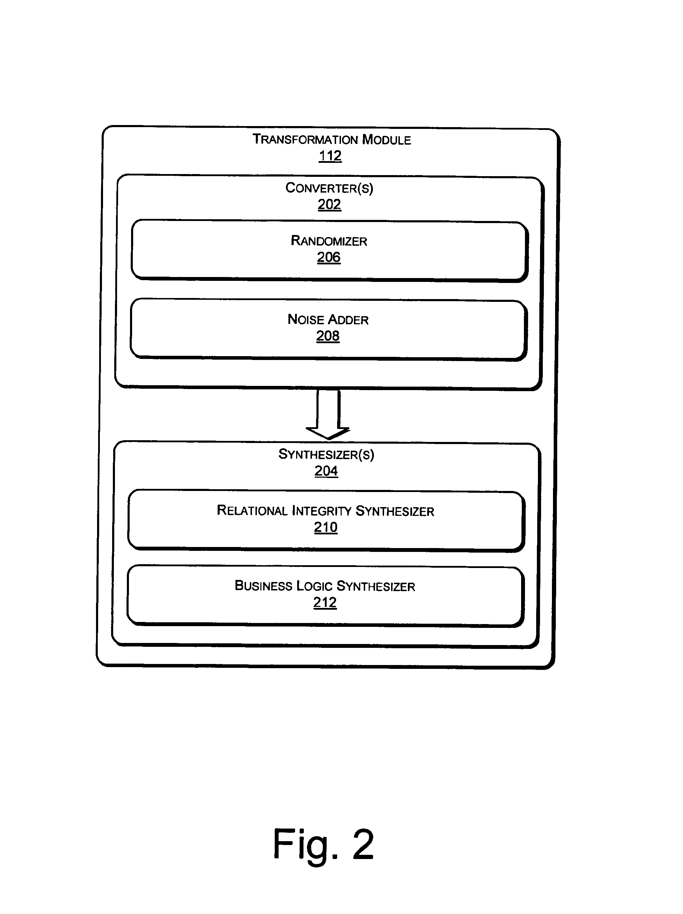

The working of the transformation module 112 is further described in detail in conjunction with Fig. 2. Fig. 2 illustrates exemplary components of the transformation module 112, in accordance with an embodiment of the present subject matter.

In said embodiment, the transformation module 112 receives the seed data 116. On receiving, the transformation module 112 transforms the seed data 116 to generate the assessment data 118. The transformation module 112 is configured to generate a desired volume of the assessment data 118 in multiple rounds or iterations R. The number of rounds R may be obtained from the ratio of the desired volume of assessment data 118 to the available volume of the seed data 116.

In an implementation, the transformation module 112 includes converter(s) 202 and synthesizer(s) 204. The converter(s) 202 preserves the cell and the column level characteristics of the seed data 116. In each round of transformation, the converter(s) 202 generates converted data and provides it to the synthesizer(s) 204. The converted data is based on the seed data 116 and includes information indicative of the characteristics that were associated with the seed data 116.

The synthesizer(s) 204, on receiving the converted data from the converter(s) 202, processes the converted data to provide relational characteristics between the columns of the converted data. Examples of such characteristics include referential integrity, association between columns, etc. Once the relational characteristics are included in the converted data, all the characteristics of the seed data are preserved in the converted data. In one implementation, the converted data can be stored in the memory 106. After completion of each round of transformation, next round of transformation is performed on the seed data 116 and the converted data from each round of transformation is appended to the stored converted data from previous rounds. The converted data after R such rounds provide desired volume of the assessment data 118. In one implementation, the assessment data 118 generated is relational data.

The converter(s) 202 may further include a randomizer 206 and a noise adder 208 for preserving the cell level and, the column level characteristics. In one implementation, the randomizer 206 converts the seed data 116 by randomizing the seed data 116. The randomization implemented by the randomizer 206 can be based on predefined criteria. The randomizer 206 may be any randomizer known in the art, for example, a list-based randomizer, a range-based randomizer, a regular-expression-based randomizer, etc. It would be appreciated that the randomization of the seed data ensures that the data so obtained is statistically varied in a manner similar to statistical variations of the actual data.

In one implementation, the randomizer 206 implements list-based randomization based on the following equation:

$$_gX_i^r = L\big[m*(r-1)+i\big]$$

where *m* is the number of records in the input seed data 116, and *L* is the list of values that can be used for generating assessment data 118 and having number of elements greater than the total number of records required in the assessment data 118.

The statistical properties of the converted data can also be preserved through the noise adder 208. In one implementation, the noise adder 208 adds a noise parameter to the original seed data 116 to obtain the converted data. The noise parameter can be generated by the noise adder 208. In another implementation, the noise adder 208 generates the noise parameter based on the seed data 116. The noise adder 208 may be implemented using noise addition techniques known in the art, examples of which include, but are not limited to, a Gaussian-based noise addition, a range-based noise addition, a percentage-based noise addition, a shift based noise addition etc.

In one implementation, the converter(s) 202 may also include customized converters (not shown in the figures) in addition to the predefined converters depending upon the requirement of the data generation process. The user may add the customized converters in the transformation module 112 through the interfaces 104. The customized converters may be implemented for any data type. In one implementation, customized converters may be configured to process only the data present in the columns of the seed data 116 based upon the data type of the column.

As previously mentioned, the converter(s) 202 converts the seed data 116 to provide the converted data. The converted data is then passed to the synthesizer(s) 204. The synthesizer(s) 204 is configured to maintain inter-column data characteristics, such as referential integrity column-wise association etc. within the converted data. In one implementation, the synthesizer(s) 204 processes the converted data received from the converter(s) 202 to generate assessment data 118. The converted data, as described, has the cell level and the column level characteristics based on the seed data 116. In the end, the assessment data 118, in one example, preserves all the characteristics of the seed data 116.

In one implementation, the synthesizer(s) 204 includes relational integrity synthesizer 210 and a business logic synthesizer 212. The relational integrity synthesizer 210 is configured to implement relational aspects in the assessment data 118. The relational aspects are based on the relational aspects of the actual data, such as the seed data 116.

For example, the relational integrity synthesizer 210 generates those values that act as primary keys for the assessment data 118. As is known in the art, a primary key uniquely identifies individual records and thus is always unique value. The primary key cannot be a NULL value. In one implementation, the relational integrity synthesizer 210 can be configured to generate unique keys for the assessment data 118. In one implementation, the relational integrity synthesizer 210 can be configured to generate foreign keys for the assessment data 118. Foreign keys, along with the primary keys and unique keys can be used for establishing a relational association between the data entries of the assessment data 118 generated by the synthesizer(s) 204.

On the other hand, the business logic synthesizer 212 implements in the assessment data 118, semantics that are based on business logic. For example, in case the assessment data 118 relates to banking related information, the business logic synthesizer 212 can implement a business logic for checking whether the account balance is less than zero or not.

In another embodiment, the synthesizer 212 may include additional synthesizers to preserve other inter-column characteristics of the seed data 116, for example, relationships across columns and derivational characteristics across columns. In said embodiment, a relationships synthesizer and a derivational synthesizer may be provided in the synthesizer 212. The relationships synthesizer helps meet relationships across columns. For example, the relationships synthesizer would come into play for two records A and B in an HR database if A.employee_id > B.employee_id to enforce A.joining_date > B.joining_date. The derivational synthesizer helps meet a clause of deriving data values for a column from other columns of a single table or multiple tables. For example, an international calling number column in a phone number database can be derived by concatenating data values from the country code column and phone number column.

In one implementation, all of the above mentioned synthesizers are necessarily included in the transformation module 112 such that the outcome of the converter(s) 202 is effectively synthesized and the assessment data 118 is a high utility data.

EXEMPLARY METHODS

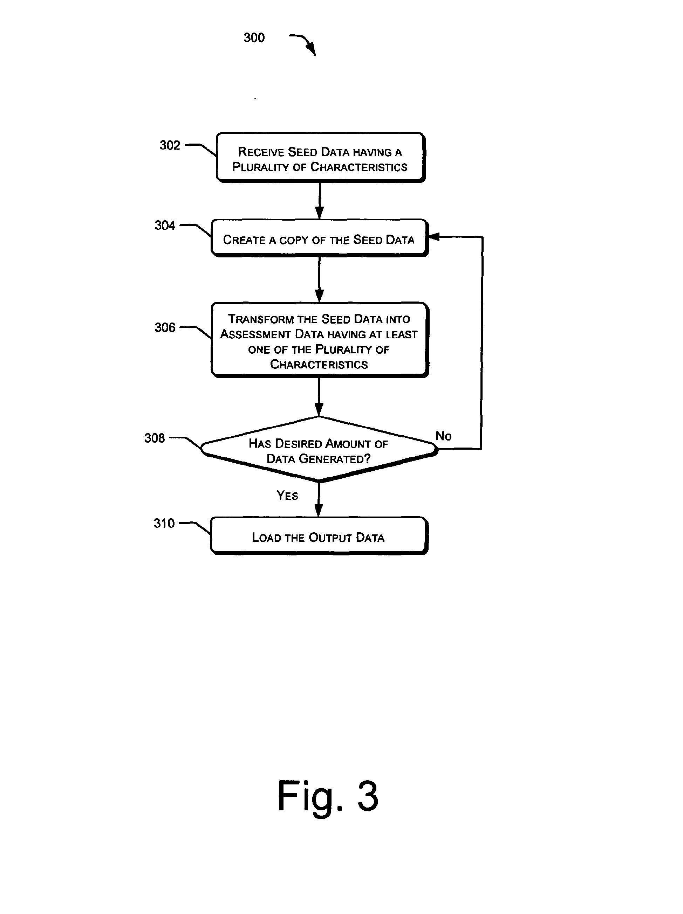

Fig. 3 illustrates an exemplary method 300 for data generation, according to an embodiment of the present subject matter. The exemplary method 300 may be described in the general context of computer executable instructions.

Generally, computer executable instructions can include routines, programs, objects, components, data structures, procedures, modules, functions, and the like that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

The order in which the method is described is not intended to be construed as a limitation, and any number of the described method blocks can be combined in any order to implement the method, or an alternate method. Additionally, individual blocks may be deleted from the method without departing from the spirit and scope of the subject matter described herein. Furthermore, the method can be implemented in any suitable hardware, software, firmware, or combination thereof.

At block 302, seed data having a plurality of characteristics is received. The characteristics associated with the seed data are similar to the characteristics of the assessment data which is to be generated. Examples of such characteristics include cell-level characteristics, column characteristics, inter-column characteristics, syntax, semantics, statistics etc. For example, the transformation module 112 receives the seed data 116 having plurality of characteristics through a user interface. In one implementation, the seed data 116 is based on data selected from a portion of the actual data, i.e., production data.

At block 304, the seed data is transformed to generate the assessment data having one or more characteristics of the seed data. For example, the transformation module 112 transforms the seed data 116 to generate assessment data 118. The assessment data 118 so generated possesses the characteristics of the seed data 116. The assessment data 118 so generated only has characteristics similar to the characteristics of the actual data, but includes different data values. In one implementation, the seed data 116 used can also be included in the assessment data 118.

In another implementation, the transformation module 112 implements transformation of the seed data 116 based on randomization and noise addition. Examples of randomization include list-based randomization, range-based randomization, regular-expression randomization etc. The process of randomization and noise addition ensure that cell and column-level characteristics are preserved during the generation of assessment data 118, based on the characteristics of the seed data 116. In one implementation, the randomization and noise addition is implemented by the converter(s) 202.

In another implementation, the transformation module 112 further processes the seed data 116 to preserve inter-column level characteristics, say referential integrity, association between the columns, etc. In one implementation, the transformation module 112 further implements business logic in the generated assessment data 118. For example, the transformation module 112 can check whether customer age related data included in the assessment data 118, is not less than a predefined value.

At block 306, it is determined whether the required volume of the assessment data has been generated. If the required volume of assessment data has not been generated ('No' path from block 306), the method flows back to block 304, where the seed data, say seed data 116, is transformed. The entire process from block 304 proceeds till assessment data, say assessment data 118, corresponding to the seed data 116 is generated again. In one implementation, the volume of the assessment data required can be specified by a user. In another implementation, the user may also specify the number of times the iterative process needs to be implemented, for generating the required volume of the assessment data 118.

If, however, it is determined that the required volume of the assessment data, say assessment data 118, has been generated ('Yes' path from block 306), the generated assessment data 118 is provided for use (block 308). For example, the assessment data 118 can be used for performing the assessment of one or more applications.

In one implementation, the method 300 may be implemented using parallelization, thereby providing the desired amount of the generated data more quickly. For the purpose, multiple transformations are simultaneously performed on the seed data 116.

In one implementation, in order to generate a voluminous data, the method 300 may be implemented by performing an experimental transformation first to generate a small amount of data, validating the data generated from the experimental transformation, and then performing an actual transformation to generate the required volume of data.

Although embodiments for data generation method and system have been described in a language specific to structural features and/or methods, it is to be understood that the invention is not necessarily limited to the specific features or methods described. Rather, the specific features and methods are disclosed as exemplary embodiments for the data generation method and system.

**Claims**

1. A computer implemented method for generating data comprising:

   receiving seed data (116) having at least one characteristic;
   transforming at least in part the seed data (116) to generate a predetermined volume of assessment data (118) having the at least one characteristics.

2. The method as claimed in claim 1, wherein the at least one characteristic of the seed data (116) is from a group consisting of cell level characteristics, column level characteristics, and inter-column level characteristics.

**3.** The method as claimed in claim 1, wherein the seed data (116) is based at least in part on production data.

**4.** The method as claimed in claim 1, wherein the seed data (116) is based at least in part on user-defined data.

**5.** The method as claimed in claim 1, wherein the transforming is performed a predefined number of times to generate the desired volume of the assessment data (118).

**6.** The method as claimed in claim 1, wherein the transforming comprises:

converting the seed data (116) to generate converted data having at least one of the cell level characteristics and the column level characteristics; and
synthesizing the converted data to produce the assessment data (118) having at least one of the inter-column level characteristics.

**7.** The method as claimed in claim 6, wherein the converting further comprises:

evaluating a noise parameter, wherein the noise parameter is based at least in part on the seed data (116); and
introducing the noise parameter in the seed data (116);

**8.** The method as claimed in claim 6, wherein the converting further comprises randomly generating non-repetitive data from a predefined data source.

**9.** The method as claimed in claim 1, further comprising validating the generated assessment data (118).

**10.** A system (100) for generating assessment data, the system (100) comprising:

a processor (102);
a memory (106) coupled to the processor (102), wherein the memory (106) comprises a transformation module (112) configured to transform at least in part seed data (116) to generate a predetermined volume of assessment data (118), and wherein the assessment data has at least one characteristic of the seed data (116).

**11.** The system as claimed in claim 10, wherein the transformation module (112) comprises a conversion module (202) configured to generate assessment data (118) including at least one of cell level characteristics and column level characteristics of the seed data (116).

**12.** The system as claimed in claim 10, wherein the transformation module (112) comprises a synthesizing module (204) configured to generate assessment data (118) including at least one inter-column characteristics.

**13.** The system as claimed in claim 12, wherein the assessment data (118) is structured data.

**14.** The system as claimed in claim 12, wherein the synthesizing module (204) is configured to generate assessment data (118) based on at least one business rule.

**15.** The system as claimed in claim 10, wherein the transformation module (112) is further configured to generate a volume of assessment data (118) based on a value specified by a user.

**16.** The system as claimed in claim 10, further comprising a graphical user interface with a characteristics editor to edit the at least one characteristics of the seed data (116) received from a user.

**17.** The system as claimed in claim 10, further comprising a graphical user interface with a pluggable interface to receive a transformation rule from a user.

**18.** The system as claimed in claim 10, further comprising a graphical user interface with a build project interface configured to:

display the at least one of the plurality of characteristics of the seed data (116) to the user; and
suggest appropriate predefined transformations for the seed data (116) to the user.

**19.** The system as claimed in claim 10, wherein the transformation module (112) is further configured to transform different portions of the seed data (116) in a predefined unequal number of times.

**20.** A computer readable medium having embodied thereon a computer program for executing a method comprising:

receiving seed data (116) having at least one characteristic;
transforming at least in part the seed data (116) to generate a predetermined volume of assessment data (118) having the at least one characteristics.

Fig. 1

TRANSFORMATION MODULE
112

CONVERTER(S)
202

RANDOMIZER
206

NOISE ADDER
208

SYNTHESIZER(S)
204

RELATIONAL INTEGRITY SYNTHESIZER
210

BUSINESS LOGIC SYNTHESIZER
212

# Fig. 2

300

302 —— RECEIVE SEED DATA HAVING A
PLURALITY OF CHARACTERISTICS

304 —— CREATE A COPY OF THE SEED DATA

306 —— TRANSFORM THE SEED DATA INTO
ASSESSMENT DATA HAVING AT LEAST
ONE OF THE PLURALITY OF
CHARACTERISTICS

308 —— HAS DESIRED AMOUNT OF
DATA GENERATED?

No

YES

310 —— LOAD THE OUTPUT DATA

# Fig. 3

Europäisches
Patentamt

European
Patent Office

Office européen
des brevets

# EUROPEAN SEARCH REPORT

Application Number

EP 11 00 5727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KENNETH HOUKJAER ET AL: "Simple and Realistic Data Generation", VLDB '06: PROCEEDINGS OF THE 32ND INTERNATIONAL CONFERENCE ON VERY LARGE DATA BASES, [Online] September 2006 (2006-09), pages 1243-1246, XP55012407, Retrieved from the Internet: URL:http://www.vldb.org/conf/2006/p1243-houkjar.pdf> [retrieved on 2011-11-17] * the whole document * | 1-20 | INV. G06Q40/00 G06F11/36 |
| X | JOSEPH E. HOAG ET AL: "A parallel general-purpose synthetic data generator", ACM SIGMOD RECORD, vol. 36, no. 1, 1 March 2007 (2007-03-01), pages 19-24, XP55012176, ISSN: 0163-5808, DOI: 10.1145/1276301.1276305 * the whole document * | 1-20 | |
| X | US 2004/267773 A1 (LEVINE CHARLES J [US] ET AL) 30 December 2004 (2004-12-30) * abstract * * paragraph [0003] - paragraph [0008] * * paragraph [0015] - paragraph [0022] * * paragraph [0048] - paragraph [0058] * | 1-20 | TECHNICAL FIELDS SEARCHED (IPC)<br><br>G06Q<br>G06F |
| A | US 2004/250188 A1 (AGGARWAL CHARU C [US]) 9 December 2004 (2004-12-09) * abstract * * paragraph [0001] - paragraph [0008] * * paragraph [0018] - paragraph [0030] * | 1-20 | |

The present search report has been drawn up for all claims

| Place of search | Date of completion of the search | Examiner |
|---|---|---|
| The Hague | 17 November 2011 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 5727

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | Publication date | Patent family member(s) | Publication date |
|---|---|---|---|
| US 2004267773 A1 | 30-12-2004 | NONE | |
| US 2004250188 A1 | 09-12-2004 | NONE | |

EPO FORM P0459

For more details about this annex : see Official Journal of the European Patent Office, No. 12/82